# EUROPEAN PATENT SPECIFICATION

(11) **EP 3 078 540 B1**
(45) Date of publication and mention of the grant of the patent: **16.05.2018**
(21) Application number: 14867574.7
(22) Date of filing: 23.06.2014
(51) Int. Cl.: B60N 2/00, B60N 2/70, A47C 7/62

(54) **SEAT DETECTION APPARATUS**
VORRICHTUNG ZUR SITZBELEGUNGSERKENNUNG
DISPOSITIF DE DÉTECTION D'OCCUPATION DE SIÈGE

(30) Priority: 03.12.2013 JP 2013249833
(43) Date of publication of application: 12.10.2016
(73) Proprietor: AISIN SEIKI KABUSHIKI KAISHA, Kariya-shi, Aichi 448-8650 (JP)
(72) Inventor: KITO Kosuke, Kariya-shi, Aichi-ken 448-8650 (JP); AOYAMA Mutsuro, Kariya-shi, Aichi-ken 448-8650 (JP); YANAI Keiichi, Kariya-shi, Aichi-ken 448-8650 (JP); AOKI Kento, Kariya-shi, Aichi-ken 448-8650 (JP)
(74) Representative: TBK
(86) International application number: PCT/JP2014/066584
(87) International publication number: WO 2015/083390

(56) References cited:
- WO-A1-01/13076
- JP-A- 2005 112 335
- JP-A- 2005 203 282
- JP-A- 2011 105 277
- JP-A- 2011 105 277
- US-A- 3 829 803
- US-A1- 2001 037 692

## Description

### TECHNICAL FIELD

The present invention relates to a seating detection apparatus.

### BACKGROUND ART

As a form of a seating detection apparatus, a form shown in Patent reference 1 is known. A load detection apparatus includes a membrane switch formed in a film-shape and a connector for connecting to an external circuit. The membrane switch includes a detection portion detecting load information by switching contact points and a conduction portion transmitting the load information to the connector. The seating detection apparatus includes a holder holding the seating detection apparatus, and the seating detection apparatus is attached, via the holder, to an S spring serving as a support member supporting a cushion member of a seat for a vehicle.

At the seating detection apparatus described in Patent reference 1, the holder is formed by a plate-shaped member including a square shape. Because the detection portion and the connector are configured to be arranged at a substantially same plane surface, an area of the holder is increased. Consequently, the holder is attached to the S spring by being fixed at four positions, thereby being subject to a restriction of an attachment position. Patent document 2 discloses a generic seating detection apparatus having the features of the preamble of claim 1. Further prior art is discussed in Patent documents 3 to 5.

### DOCUMENT OF PRIOR ART

### PATENT DOCUMENT

Patent document 1: JP2011-105277A
Patent document 2: US 3 829 803 A
Patent document 3: WO 01/13076 A1
Patent document 4: US 2001/037692 A1
Patent document 5: JP 2011 105277 A

### OVERVIEW OF INVENTION

### PROBLEM TO BE SOLVED BY INVENTION

The present invention is made in consideration of these circumstances and an object of the present invention is to provide a seating detection apparatus including an enhanced degree of freedom in attachment to a support member.

### MEANS FOR SOLVING PROBLEM

Summary is that a seating detection apparatus related to the present invention includes a detection portion detecting load information inputted from a detection direction that is predetermined, a connector including a connection port for connecting to an external circuit and arranged on a plane which is different from a plane on which the detection portion is arranged in such a manner that the connector overlaps with the detection portion in the detection direction, a conduction portion transmitting the load information from the detection portion to the connector and arranged from the detection portion towards the connector in a state of being bent, and a holder holding the detection portion and the connector, and including an attachment portion which is attachable to a support member supporting a cushion member of a seat for a vehicle from below, a holding portion being engageable with the connector and disengageable from the connector and an extended portion extended downwardly from a side opposite to a side on which the conduction portion extends from the detection portion, the extended portion including the holding portion at a distal end of the extended portion.

### EFFECTS OF THE INVENTION

According to this, as the detection portion and the connector are arranged to be overlapped with each other on the different planes, a length in a lateral direction or a width direction is reduced, and an area of the holder can be reduced. Accordingly, a restriction on an attachment position of the holder to the support member is reduced, and a degree of freedom of the attachment to the support member can be enhanced.

### BRIEF DESCRIPTION OF DRAWINGS

[Fig. 1] Fig. 1 is a perspective view showing an entire structure of a seat for a vehicle to which a seating detection apparatus of the present invention s applied.
[Fig. 2A] Fig. 2A is an enlarged cross sectional view of a portion including the seating detection apparatus for the seat for the vehicle which is illustrated in Fig. 1.
[Fig. 2B] is an enlarged cross-sectional view of a vicinity of a detection portion in an off state.
[Fig. 2C] is an enlarged cross-sectional view of the vicinity of the detection portion in an on state.
[Fig. 3] is a perspective view illustrating the seating detection apparatus of a first embodiment of the present invention which is attached to the seat for the vehicle which is illustrated in Fig. 1.
[Fig. 4] Fig. 4 is a perspective view illustrating the seating detection apparatus illustrated in Fig. 3.
[Fig. 5] Fig. 5 is a view used for explaining that load is transmitted in a cushion member when the load is applied.
[Fig. 6] Fig. 6 is a perspective view illustrating a state in which a seating detection apparatus of a second embodiment of the present invention is attached to the seat for the vehicle.
[Fig. 7] Fig. 7 is a side view illustrating the seating detection apparatus illustrated in Fig. 6.
[Fig. 8] Fig. 8 is a perspective view illustrating a state in which a seating detection apparatus of a third embodiment of the present invention is attached to the seat for the vehicle.
[Fig. 9] Fig. 9 is a perspective view illustrating the seating detection apparatus illustrated in Fig. 8.
[Fig. 10] Fig. 10 is a perspective view viewing, from an obliquely downward direction, the state illustrated in Fig. 8 in which the seating detection apparatus is attached to the seat for the vehicle.
[Fig. 11A] Fig. 11A is a cross-sectional view illustrating a seating detection apparatus of a fourth embodiment of the present invention.
[Fig. 11B] Fig. 11B is a cross-sectional view illustrating a seating detection apparatus of another example of the fourth embodiment of the present invention.

### MODE FOR CARRYING OUT THE INVENTION

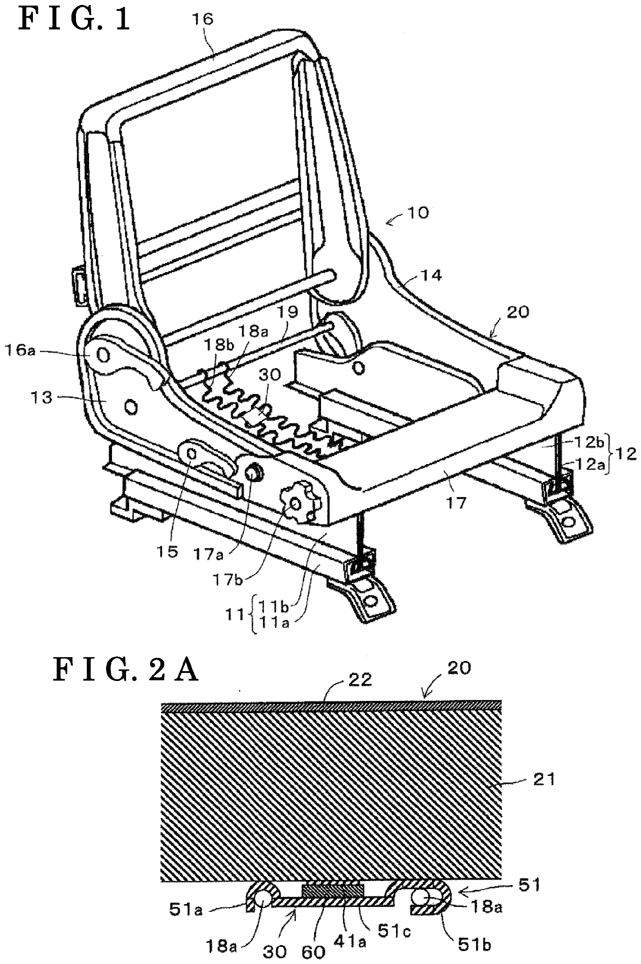

A case will be described in which a seating detection apparatus of a first embodiment of the present invention is applied to a seat for a vehicle with reference to Figs. 1 to 4. A seat 10 for a vehicle includes first and second seat truck mechanism 11 and 12, first and second lower arms 13 and 14, a back frame 16, a front cushion frame 17, a support member 18, a connection shaft 19 and a cushion member 21.

The first seat truck mechanism 11 is arranged at an outer side of the seat, and is formed by a first lower rail 11a provided at a floor side and a first upper rail 11b slidably engaging with the first lower rail 11a. Similarly, the second seat truck mechanism 12 is arranged at an inner side of the seat, and is formed by a second lower rail 12a provided at the floor side and a second upper rail 12b slidably engaging with the second lower rail 12a.

The first and second lower arms 13, 14 which serve as side frames are provided on the first and second upper rails 11b and 12b via a lift mechanism using a parallel linkage. An operation handle 15 of the lift mechanism is for transitioning a lock state in which the first and second lower arms 13 and 14 are prohibited from moving upwardly and downwardly to an unlock state in which the first and second lower arms 13 and 14 are allowed to move upwardly and downwardly.

The back frame 16 is tiltably attached to rear portions of the first and second lower arms 13 and 14 to be arranged therebetween. An operation handle 16a of a reclining apparatus which adjust a tilt angle of the back frame 16 is for transitioning a lock state in which the back frame 16 is prohibited from tilting to an unlock state in which the back frame 16 is allowed to tilt.

The front cushion frame 17 which is pivoted about a pin 17a by a front tilt mechanism is provided at front portions of the first and second lower arms 13 and 14 which are arranged side by side with each on the floor side. The front cushion frame 17 pivots about the pin 17a in an upper and lower direction due to rotation of an operation handle 17b of the front tilt mechanism which is provided via a braking mechanism.

The support member 18 supporting the cushion member 21 from below is formed by a spring member (which will be hereinafter referred to as "S spring") 18 in which steel wire is bent continually in S shapes and which includes a spring function. The S spring 18 is hung between the connection shaft 19 and the front cushion frame 17, and is secured at the connection shaft 19 and the front cushion frame 17. The connection shaft 19 transmits a movement of the lift mechanism on a side of the first seat truck mechanism 11 to the lift mechanism on a side of the second seat truck mechanism 12.

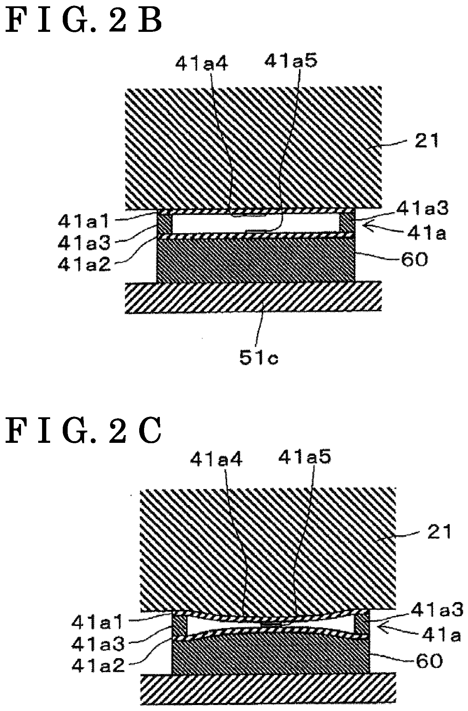

As illustrated in Figs. 1 and 2, below the cushion member 21, a seating detection apparatus 30 is attached to and supported by the S spring 18. A front surface of the cushion member 21 is covered with a surface cover 22 including leather, fiber and moquette, for example.

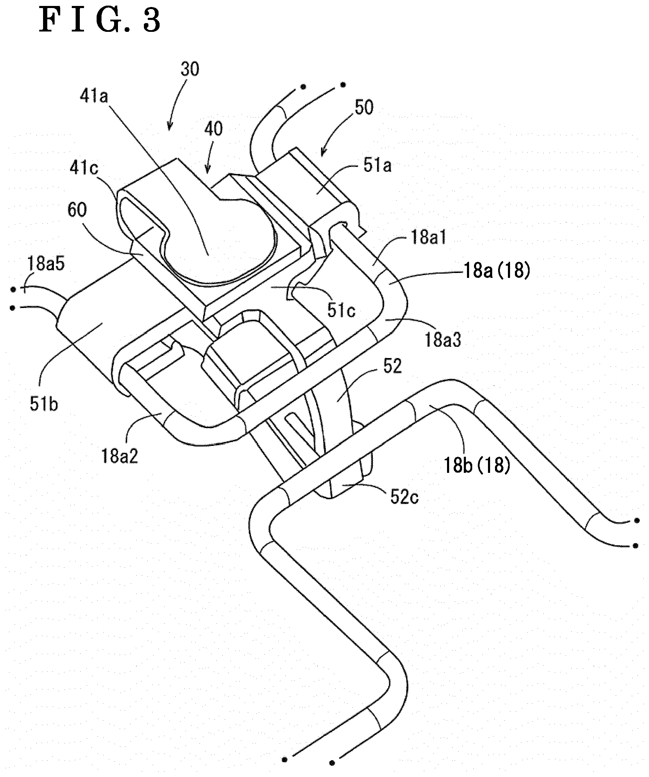

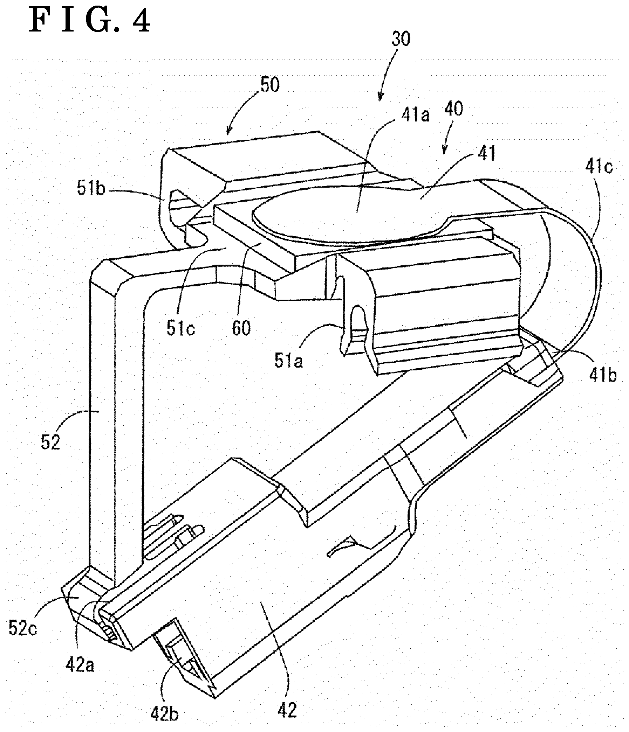

As illustrated in Figs. 3 and 4, the seating detection apparatus 30 includes a load detection apparatus 40 and a holder 50. As illustrated mainly in Fig. 4, the load detection apparatus 40 includes a membrane switch 41 formed in a film shape or in a sheet shape, and a connector 42. The membrane switch 41 includes a detection portion 41a and an output portion 41b. As illustrated in Fig. 2A, the detection portion 41a is arranged below the cushion member 21 of the cushion portion 20 of the seat 10 for the vehicle and detects load information.

As illustrated in Fig. 2B, the detection portion 41a includes an upper portion film 41a1, a lower portion film 41a2 and a separation holding portion 41a3. An upper surface (an outer surface) of the upper portion film 41a1 is in contact with a bottom surface of the cushion member 21 and a contact point 41 a4 is provided at a center of an inner surface of the upper portion film 41a1. A bottom surface (an outer surface) of the lower portion film 41a2 is in contact with an upper surface of a spacer 60 and a contact point 41a5 is provided at a center of an inner surface of the lower portion film 41a2. The separation holding portion 41a3 is disposed between the upper portion film 41a1 and the lower portion film 41a2 along outer circumferential edges of the upper portion film 41a1 and the lower portion film 41a2. Hardness of the separation holding portion 41a3 is set at a value which is larger than hardness of the cushion member 21 and/or hardness of the spacer 60. These members are formed by an elastic material. The contact point 41a4 and the contact point 41 a5 are arranged to face each other with a space portion provided therebetween.

When load is applied to the cushion member 21 at the detection portion 41a including the above-described configuration, in a case where the hardness of the cushion member 21 and the hardness of the spacer 60 are equal to each other, the upper portion film 41a1 deflects downwardly due to the load from the cushion member 21, the lower portion film 41a2 deflects upwardly due to a reaction force from the spacer 60, and the contact point 41a4 and the contact point 41a5 are in contact with each other as illustrated in Fig. 2C. Accordingly, the detection portion 41a is turned on and thus the detection portion 41a can detect the load information. At this time, amounts of deflection of the upper portion and the lower portion films 41a1 and 41a2 are equal to each other. In addition, because the load is concentrated at the upper portion film 41a1, sensitivity decreases.

In a case where the hardness of the cushion member 21 is larger than the hardness of the spacer 60, the amount of deflection of the lower portion film 41a2 is larger than the amount of deflection of the upper portion film 41a1. In addition, in a case where the hardness of the cushion member 21 is smaller than the hardness of the spacer 60, the amount of deflection of the lower portion film 41 a2 is smaller than the amount of deflection of the upper portion film 41a1.

As described above, in the present embodiment, the load information is not an absolute load value. In a case where a load which is smaller than a predetermined load is applied, the load information of the present embodiment indicates such a state, that is, an off state. On the other hand, in a case where a load which is larger than the predetermined load is applied, the load information of the present embodiment indicates such a state, that is, an on state. It is ideal that one or more detection portions 41a are formed. In the present embodiment, one detection portion 41a is formed.

The output portion 41b is connected to the detection portion 41a via a conduction portion 41c formed by a flexible printed substrate including flexibility, for example. The output portion 41b outputs the load information detected at the detection portion 41a. That is, an output electrode is formed at the output portion 41b. The connector 42 is connected to the output portion 41b. In addition, the connector 42 is configured to be attached to a holding portion 52c provided at the holder 50, which will be described below, in a detachable manner. That is, the connector 42 is provided with an engagement portion 42a for the holding portion, which disengageably engages with the holding portion 52c.

As illustrated in Fig. 4, the holder 50 includes an extended portion 52 formed to extend downwardly from a side opposite to a side at which the conduction portion 41c extends from the detection portion 41a. The holding portion 52c is provided at a distal end side of the extended portion 52, and the holding portion 52c disengageably engages with the engagement portion 42a for the holding portion which is formed at the connector 42. As illustrated in Fig. 4, the conduction portion 41c formed by the flexible printed substrate is bent so as to be folded back and the engagement portion 42a for the holding portion which is formed at the connector 42 engages with and attached to the holding portion 52c. Accordingly, the connector 42 is arranged on a plane which is different from a plane on which the detection portion 41a is arranged in such a manner that the connector 42 overlaps with the detection portion 41a in a predetermined detection direction of the load information by the detection portion 41a. A connection port 42b for connecting to an external circuit is provided at a distal end of the connector 42, and the connector 42 is held at the holder 50 in such a manner that the connection port 42b is open obliquely downwardly.

As illustrated in Fig. 3, the holder 50 allows the load detection apparatus 40 to be supported by the S spring 18 serving as the support member. Both ends of the holder 50 are attached to upper portions of two portions 18a1 and 18a2 of the S spring 18a in a manner that the holder 50 is across the portions 18a1 and 18a2. The two portions 18a1 and 18a2 oppose each other. The portion 18a1 corresponds to a front side portion and the portion 18a2 corresponds to a rear side portion.

A locking portion 51a is formed at one end (a front end) of the holder 50. The locking portion 51a engages with the front side portion 18a1 of the S spring 18a and is locked thereat in a disengageable manner. The locking portion 51a includes a downward opening and an inner diameter of the opening is formed to be slightly smaller than the S spring 18a. Because the locking portion 51a is fitted to an exterior of the S spring 18a, the locking portion 51a is restricted from moving relative to the S spring 18a in a radial direction (a front and rear direction of the vehicle), however, the locking portion 51a can move relative to the S spring 18a in an axial direction of the S spring 18a (a right and left direction of the vehicle).

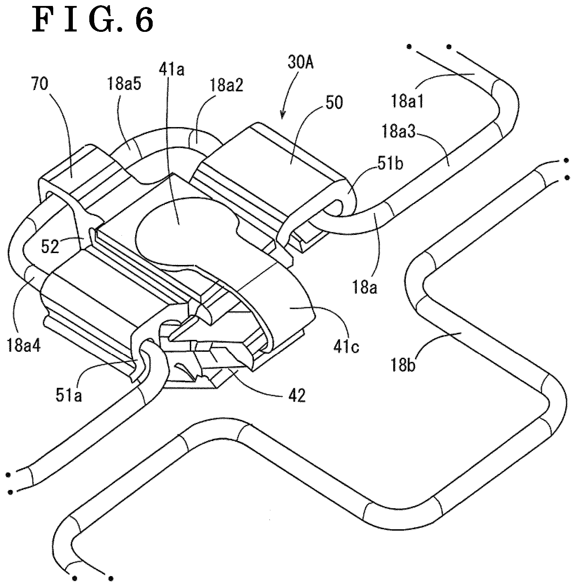

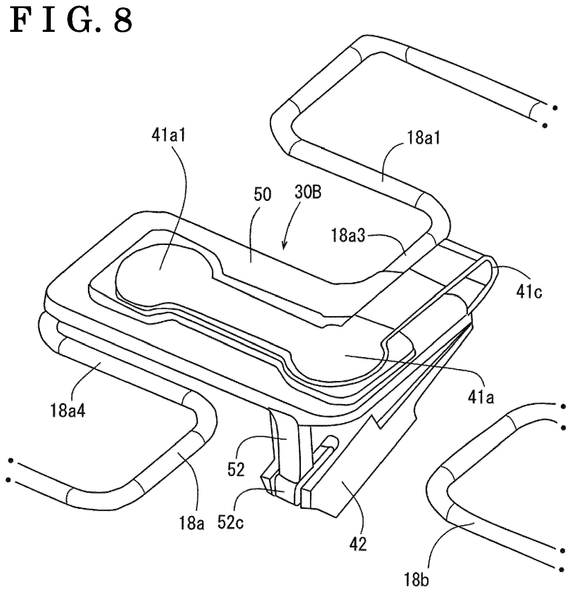

An engagement portion 51b is formed at the other end (a rear end) of the holder 50. The engagement portion 51b engages with the rear side portion 18a2 of the S spring 18a in a detachable manner. The engagement portion 51b includes a cross section of a narrow elongated groove shape having an opening which opens towards the front side (which opens in the horizontal direction). An inner diameter of the opening is formed to be slightly larger than or approximately equal to the S spring 18a. The engagement portion 51b can move relative to the S spring 18a in the radial direction (the front and rear direction of the vehicle) and the engagement portion 51b can move relative to the S spring 18a in the axial direction of the S spring 18a (the right and left direction of the vehicle). As illustrated in Fig. 3, the front side portion 18a1 of the S spring 18a and the rear side portion 18a2 of the S spring 18a are connected to each other at a connection portion 18a3 extended in a front and rear direction of the S spring 18. At a rear side relative to the rear side portion 18a2 of the S spring 18, a second rear side portion 18a4 extended in parallel with the rear side portion 18a2 is formed (refer to Figs. 6 and 8), and the second rear side portion 18a4 is connected at a second connection portion 18a5 extended in parallel with the connection portion 18a3. The connection portion 18a3 and the second connection portion 18a5 are arranged to be apart from each other in the right and left direction, that is, a width direction of the vehicle. The locking portion 51a and the engagement portion 51b are attachment portions being attachable to the S spring 18 (18a) serving as the support member supporting the cushion member 21 from below.

According to the holder 50 configured as described above, when an occupant is seated, even in a case where the S spring 18a is extended and thus an interval between the front side portion 18a1 and the rear side portion 18a2 is expanded, the expansion is not prevented and the holder 50 is supported on the S spring 18a reliably.

In addition, a pressure receiving portion 51c is formed at the holder 50. The pressure receiving portion 51c is supported by the S spring 18 (18a1, 18a2) via the locking portion 51a and the engagement portion 51b, and is arranged below the detection portion 41a of the load detection apparatus 40. The pressure receiving portion 51c receives pressure from the cushion member 21 via at least the detection portion 41a. The pressure receiving portion 51c is formed between the locking portion 51a and the engagement portion 51b of the holder 50 to include a recessed configuration.

The pressure receiving portion 51c is provided with the spacer 60. The spacer 60 is attached to an upper surface of the pressure receiving portion 51c with adhesive agent or double-sided tape, for example. The spacer 60 is configured to be disposed between the detection portion 41a of the load detection apparatus 40 and the pressure receiving portion 51c. The spacer 60 is a thin plate-shaped member formed by an elastic material including cushion material, rubber material or cloth material (non-woven fabric, felt, for example). In the present embodiment, the spacer 60 is formed in a quadrate shape, is accommodated in a portion of the recessed configuration, and is broader than the detection portion 41a.

The shape of the spacer 60 may be changed by providing a protrusion or providing a recessed portion, or the material of the spacer 60 may be changed. Accordingly, the hardness of the spacer 60 is changed, and thus the sensitivity of the detection portion 41a can be changed. The sensitivity of the detection portion 41a increases in a case where the protrusion is provided at the spacer 60. To the contrary, the sensitivity of the detection portion 41a decreases in a case where the recessed portion is provided at the spacer 60. In a case of changing the sensitivity by changing the hardness, the sensitivity depends on a relative hardness difference between the cushion member 21 and the spacer 60. Specifically, there is a tendency that the larger the relative hardness difference is, the higher the sensitivity becomes, and that the smaller the relative hardness difference is, the lower the sensitivity becomes. More specifically, by setting the relative hardness difference of the cushion member 21 and the spacer 60, the load or the pressure is easily concentrated on a portion of the member of which the hardness is lower, the portion which corresponds to the detection portion 41a. Accordingly, the amount of deflection at the portion becomes larger, and consequently the contact portion 41a4 and the contact portion 41 a5 are easily in contact with each other. In consequence, the larger the relative hardness difference between the cushion member 21 and the spacer 60 is, the higher the sensitivity of the detection portion 41a is. However, even though the hardness difference is large, the sensitivity decreases in a case where the hardness of the spacer is significantly high and/or in a case where the hardness of the spacer is significantly low (for example, in a case where the hardness is not different from hardness of the holder 50 (in a case of being significantly high) and/or in a case where the recessed portion is provided in a region of the spacer 60, the region which corresponds to the film portion of the detection portion 41a (in a case of being significantly low), for example).

Next, the attachment of the seating detection apparatus 30 to the S spring 18 serving as the support member will be described. First, the engagement portion 51b is made to engage with the S spring 18a (18a2). At this time, the engagement portion 51b engages with the S spring 18a, however, the holder 50 is rotatable about the S spring 18a serving as an axis. The holder 50 is slidable within a rage in which the holder 50 does not disengage, while the S spring 18a serving as a guide pin.

Next, by rotating or sliding the holder 50, the engagement portion 51a is made to engage with the S spring 18a (18a1) and to be locked thereat.

As described above, in a state where the attachment portions 51a and 51b are attached to the support member 18 so that the detection portion 41a can detect the load information inputted from above via the cushion member 21, the connector 42 is held by the holder 50 in such a manner that the connection port 42b is open obliquely downwardly.

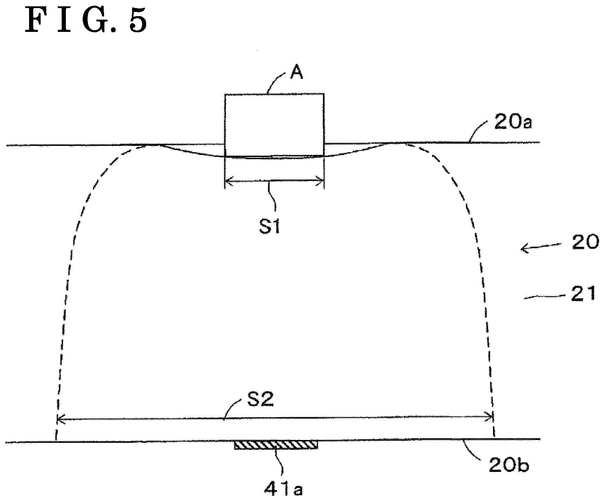

Transmission of the load at the cushion member 21 will be described with reference to Fig. 5. In a case where an object A is placed on a seating surface 20a of the cushion portion 21 and thus the load is applied, the load spreads beyond a contact range S1 with which the object A is in contact and is transmitted within the cushion member 21 towards a substantially right downward direction (transmitted within a range drawn by the broken line in Fig. 5). At this time, the load is transmitted to the bottom surface of the cushion member 21 in a range S2 that is broader than the contact range S1. In a case where the detection portion 41a of the load detection apparatus 40 is placed within the transmission range S2, the load can be detected. In the present embodiment, the membrane switch 41 is used as the load detection apparatus 40. In this case, only when load which is equal to or larger than the load by which the membrane switch 41 is turned on (the aforementioned predetermined load) is applied, the application of the load is detected. Thus, even in a case where the detection portion 41a is provided at the bottom surface of the cushion member 21, a state of the load when the load is applied to the seating surface can be detected reliably.

In addition, in a case where a local load is applied, the local load is transmitted only to a surface part and is not transmitted to the bottom surface of the cushion member 21. Thus, it can be restricted that load applied by a corner portion of a baggage is detected erroneously.

In the above-described embodiments, the membrane switch is used as the load detection apparatus 40, however, a stroke sensor may be used. A load detection apparatus may be used, which includes a detection portion using a piezoelectric element (a piezo element), and includes a detection circuit where a detection signal from the detection portion is processed and then is outputted as an output value.

In a case of the stroke sensor, a whole main body of the stroke sensor may be mounted on the pressure receiving portion 51c and a connector of a wire harness connected to the main body may be fixed to the holding portion 52c. In addition, also in a case of the load detection apparatus including the piezoelectric element, a whole main body with which the piezoelectric element and the detection circuit are integrated may be mounted on the pressure receiving portion 51c, and a connector of a wire harness connected to the main body may be fixed to the holding portion 52c.

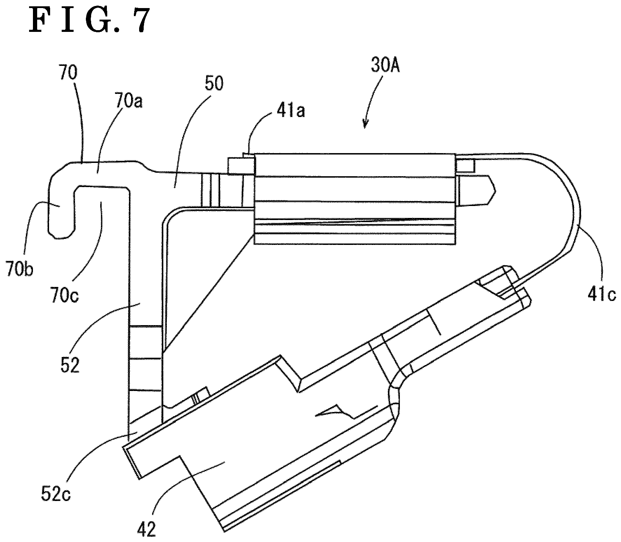

Next, a seating detection apparatus 30A of a second embodiment of the present invention will be described with reference to Figs. 6 and 7. The seating detection apparatus 30A is formed by adding a restriction portion 70 to the holder 50 of the seating detection apparatus 30 of the first embodiment. The seating detection apparatus 30A includes a configuration in which the holder 50 is attached to the rear side portion 18a2 of the S spring 18a and to the second rear side portion 18a4 of the S spring 18a, at the attachment portions (the locking portion 51a and the engagement portion 51b).

The restriction portion 70 restricts the holder 50 from displacing in an axial direction of the rear side portion 18a2 of the S spring 18a and of the second rear side portion 18a4 of the S spring 18a, and thus prevents the holder 50 from dislocating from a predetermined position. For example, the restriction portion 70 is formed integrally with the holding portion 52c, and includes a horizontal portion 70a and a downwardly extended portion 70b. The horizontal portion 70a is extended in a direction of the second connection portion 18a5 of the S spring 18a1. The downwardly extended portion 70b is extended downwardly from the horizontal portion 70a.

The second connection portion 18a5 of the S spring 18a1 is accommodated in an inner space portion 70c formed by the horizontal portion 70a and the downwardly extended portion 70b of the restriction portion 70. The downwardly extended portion 70b of the holder 50 is in contact with the second connection portion 18a5 of the S spring 18a1, and accordingly the holder 50 is restricted from displacing in the axial direction of the rear side portion 18a2 and the second rear side portion 18a4 of the S spring 18a. In addition, the horizontal portion 70a of the restriction portion 70 can support an excessive load and prevent the excessive load from being applied to the detection portion 41a.

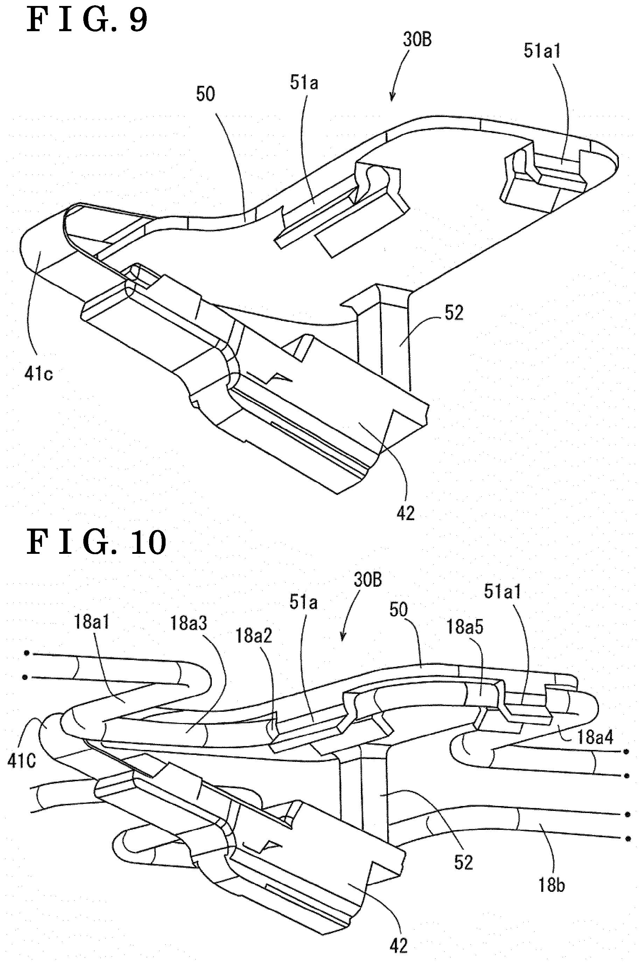

Next, a seating detection apparatus 30B of a third embodiment of the present invention will be described with reference to Figs. 8, 9 and 10. The seating detection apparatus 30B includes a configuration in which a second locking portion 51a1, which is similar to the locking portion 51a, is provided at the holder 50 of the seating detection apparatus 30 of the first embodiment instead of the engagement portion 51b. As illustrated in Figs. 9 and 10, the second locking portion 51a1 is arranged in a direction which is substantially perpendicular to the locking portion 51a. In addition, the configuration includes a second detection portion 41a1 in addition to the detection portion 41a, and the detection portion 41a and the second detection portion 41a1 select an AND circuit or an OR circuit as needed.

At the seating detection apparatus 30B, relative to the S spring 18a, the holder 50 is attached to the rear side portion 18a2 at the locking portion 51a and the holder 50 is attached to the second connection portion 18a5 at the second locking portion 51a. Accordingly, the holder 50 is restricted from being displaced in the front and rear direction of the vehicle and in the width direction of the vehicle, and is prevented from dislocating from a predetermined attachment position.

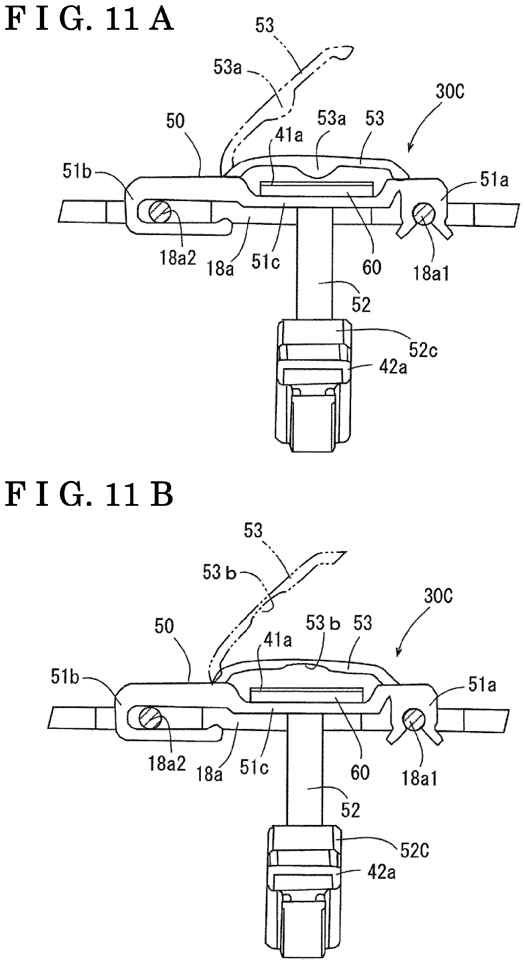

Next, a seating detection apparatus 30C of a fourth embodiment of the present invention will be described with reference to Figs. 11A and 11B. According to the seating detection apparatus 30C, at the holder 50 of the seating detection apparatus 30 of the first embodiment, a detection sensitivity change portion 53 changing the detection sensitivity of the detection portion 41a is formed above the detection portion 41a to be integrally with the holder 50 or to be separately from the holder 50, so that the detection sensitivity change portion 53 can press the detection portion 41a. As illustrated in Fig. 11A, the detection sensitivity change portion 53 includes a protrusion 53a formed at a side facing the detection portion 41a and can change the detection sensitivity of the detection portion 41a. Alternatively, as illustrated in Fig. 11B, the detection sensitivity change portion 53 includes a recessed portion 53b formed at the side facing the detection portion 41a and can change the detection sensitivity of the detection portion 41a. In a case where the protrusion 53a is provided at the detection sensitivity change portion 53, the sensitivity of the detection portion 41a increases. To the contrary, in a case where the recessed portion 53b is provided at the detection sensitivity change portion 53, the sensitivity of the detection portion 41a decreases.

In the above-described embodiments, the membrane switch is used as the load detection apparatus 40, however, the stroke sensor may be used. The load detection apparatus may be used, which includes the detection portion using the piezoelectric element (the piezo element, for example), and includes the detection circuit where the detection signal from the detection portion is processed and then is outputted as an output value.

As described above, the seating detection apparatus 30, 30A to 30C of the first to the fourth embodiments of the present invention includes the detection portion 41a detecting the load information inputted from the predetermined detection direction, the connector 42 including the connection port 42b for connecting to the external circuit and arranged on the plane which is different from the plane on which the detection portion 41a is arranged in such a manner that the connector 42 overlaps with the detection portion 41a in the detection direction, the conduction portion 41c transmitting the load information from the detection portion 41a to the connector 42 and arranged from the detection portion 41a towards the connector 42 in a state of being bent, and the holder 50 holding the detection portion 41a and the connector 42, and including the attachment portion 51a, 51a1, 51b which is attachable to the support member 18 supporting the cushion member 21 of the seat 10 for the vehicle from below. As the detection portion 41a and the connector 42 are arranged in the overlapped manner on the different planes from each other, a length in a lateral or the width direction is reduced, and an area of the holder 50 can be reduced. Accordingly, a restriction on the attachment position of the holder 50 to the support member 18 is reduced and a degree of freedom in attaching the holder 50 to the support member 18 can be enhanced.

As described above, according to the seating detection apparatus 30, 30A to 30C of the first to the fourth embodiments of the present invention, in a state where the attachment portion 51a, 51a1, 51b is attached to the support member 18 so that the load information inputted from above via the cushion member 21 is detectable by the detection portion 41a, the connector 42 is held by the holder 50 in such a manner that the connection port 42b is open towards the obliquely downward direction. Accordingly, the external circuit can be connected to the connector 42 from the obliquely downward direction, and the connecting operation thereof is easier compared to a case where the connector 42 is arranged horizontally. In addition, a bending stress of the conduction portion 41c can be reduced, thereby providing an advantage to strength.

As described above, according to the seating detection apparatus 30, 30A to 30C of the first to the fourth embodiments of the present invention, the holder 50 includes the holding portion 52c being engageable with the connector 42 and disengageable from the connector 42. Accordingly, the connector 42 can engage with the holder 50 and can be attached to the holder 50 reliably, thereby enhancing an assembling performance.

As described above, according to the seating detection apparatus 30, 30A to 30C of the first to the fourth embodiments of the present invention, the holder 50 includes the extended portion 52 extended downwardly from the side opposite to the side on which the conduction portion 41c extends from the detection portion 41a, and the extended portion 52 includes the holding portion 52c at the distal end of the extended portion 52. Accordingly, the connector 42 can be held at a predetermined position.

As described above, according to the seating detection apparatus 30, 30A to 30C of the first to the fourth embodiments of the present invention, the attachment portion 51a, 51a1, 51b is provided at at least the two positions. Accordingly, the seating detection apparatus 30, 30A to 30C can be attached to the support member 18 at the two positions of the holder 50.

As described above, according to the seating detection apparatus 30A of the third embodiment of the present invention, the attachment portions 51a and 51a1 are arranged in the directions which are substantially perpendicular to each other. Accordingly, the displacement of the holder 50 in the axial direction and the radial direction of the support member 18 is restricted, and the holder 50 can be held at the predetermined attachment position.

As described above, according to the seating detection apparatus 30A of the second embodiment of the present invention, the holder 50 includes the restriction portion 70 restricting the holder 50 from displacing in the axial direction of the support member 18. Accordingly, it can be prevented that the holder 50 displaces in the axial direction of the support member 18 and thus is dislocated from the predetermined attachment position.

As described above, according to the seating detection apparatus 30A of the second embodiment of the present invention, the restriction portion 70 includes the horizontal portion 70a and the downwardly extended portion 70b extended downwardly from the horizontal portion 70a. Accordingly, the downwardly extended portion 70b of the holder 50 and the support member 18 are in contact with each other to restrict the holder 50 from displacing in the axial direction of the support member 18. In addition, the horizontal portion 70a can receive the load applied from above, and thus the holder 50 that is advantageous in the strength can be provided.

As described above, according to the seating detection apparatus 30C of the fourth embodiment of the present invention, the holder 50 includes the detection sensitivity change portion 53 which can change the detection sensitivity of the detection portion 41a. As the detection sensitivity of the detection portion 41a is changeable, the seating detection apparatus can be communized and a mountability of the seating detection apparatus on the vehicle is enhanced.

As described above, according to the seating detection apparatus 30C of the fourth embodiment of the present invention, the detection sensitivity change portion 53 includes the protrusion 53a or the recessed portion 53b. The protrusion 53a or the recessed portion 53b is provided at the portion facing the detection portion 41a. As the detection sensitivity change portion 53 includes the protrusion 53a or the recessed portion 53b which are formed at the portion facing the detection portion 41a, the detection sensitivity change portion 53 can change the detection sensitivity of the detection portion 41a. In a case where the protrusion 53a is provided at the detection sensitivity change portion 53, the sensitivity of the detection portion 41a increases. To the contrary, in a case where the recessed portion 53b is provided at the detection sensitivity change portion 53, the sensitivity of the detection portion 41a decreases.

As described above, according to the seating detection apparatus 30, 30A to 30C of the first to the fourth embodiments of the present invention, the detection portion 41a corresponds to the membrane switch 41 formed in the film-shape. Accordingly, the detection portion 41a can be formed thin, and a drip proof performance and/or a dust proof performance can be enhanced.

### EXPLANATION OF REFERENCE NUMERALS

- 10: seat for vehicle
- 18: S spring (support member)
- 21: cushion member
- 30, 30A, 30B, 30C: seating detection apparatus
- 41: membrane switch
- 41a: detection portion
- 41: conduction portion
- 42: connector
- 42b: connection port
- 50: holder
- 51a: locking portion (attachment portion)
- 51a1: second locking portion (attachment portion)
- 51b: engagement portion (attachment portion)
- 52: extended portion
- 53: detection sensitivity change portion
- 53a: protrusion
- 53b: recessed portion
- 70: restriction portion
- 70a: horizontal portion
- 70b: downwardly extended portion

## Claims

1. A seating detection apparatus comprising:
a detection portion (41a) detecting load information inputted from a detection direction that is predetermined;
**characterized by**
a connector (42) including a connection port (42b) for connecting to an external circuit and arranged on a plane which is different from a plane on which the detection portion (41a) is arranged in such a manner that the connector (42) overlaps with the detection portion (41a) in the detection direction;
a conduction portion (41c) transmitting the load information from the detection portion (41a) to the connector (42) and arranged from the detection portion (41a) towards the connector (42) in a state of being bent; and
a holder (50) holding the detection portion (41a) and the connector (42), and including an attachment portion (51a, 51a1, 51b) which is attachable to a support member (18) supporting a cushion member (21) of a seat (10) for a vehicle from below, a holding portion (52c) being engageable with the connector (42) and disengageable from the connector (42) and an extended portion (52) extended downwardly from a side opposite to a side on which the conduction portion (41c) extends from the detection portion (41a), the extended portion (52) including the holding portion (52c) at a distal end of the extended portion (52).

2. The seating detection apparatus according to claim 1, wherein, in a state where the attachment portion (51a, 51a1, 51b) is attached to the support member (18) so that load information inputted from above via the cushion member (21) is detectable by the detection portion (41a), the connector (42) is held by the holder (50) in such a manner that the connection port (42b) is open obliquely downwardly.

3. The seating detection apparatus according to either claim 1 or 2, wherein the attachment portion (51a, 51a1, 51b) is provided at at least two positions.

4. The seating detection apparatus according to claim 3, wherein the attachment portions (51a, 51a1) are arranged in directions which are substantially perpendicular to each other.

5. The seating detection apparatus according to any one of claims 1 to 4, wherein the holder (50) includes a restriction portion (70) restricting the holder (50) from displacing in an axial direction of the support member (18).

6. The seating detection apparatus according to claim 5, wherein the restriction portion (70) includes a horizontal portion (70a) and a downwardly extended portion (70b) extended downwardly from the horizontal portion (70a).

7. The seating detection apparatus according to any one of claims 1 to 6, wherein the holder (50) includes a detection sensitivity change portion (53) which is changeable detection sensitivity of the detection portion (41a).

8. The seating detection apparatus according to claim 7, wherein the detection sensitivity change portion (53) includes a protrusion (53a) or a recessed portion (53b), the protrusion (53a) or the recessed portion (53b) is provided at a portion facing the detection portion (41a).

9. The seating detection apparatus according to any one of claims 1 to 8, wherein the detection portion (41a) corresponds to a membrane switch (41) formed in a film-shape.

## Patentansprüche

1. Sitzerfassungsvorrichtung mit:
einem Erfassungsabschnitt (41a), der eine Lastinformation erfasst, die von einer vorbestimmten Erfassungsrichtung eingegeben wird;
**gekennzeichnet durch**
einen Verbinder (42), der einen Verbindungsanschluss (42b) zum Verbinden mit einem äußeren Stromkreis enthält und der auf einer Ebene angeordnet ist, die von einer Ebene, auf der der Erfassungsabschnitt (41a) angeordnet ist, in solch einer Weise verschieden ist, dass der Verbinder (42) mit dem Erfassungsabschnitt (41a) in der Erfassungsrichtung überlappt;
einen Leitungsabschnitt (41c), der die Lastinformation von dem Erfassungsabschnitt (41a) zu dem Verbinder (42) überträgt und der von dem Erfassungsabschnitt (41a) in Richtung des Verbinder (43) in einem gebogenen Zustand angeordnet ist; und
einen Halter (50), der den Erfassungsabschnitt (41a) und den Verbinder (42) hält und einen Befestigungsabschnitt (51a, 51a1, 51b), der an einem Stützbauteil (18) angebracht werden kann, das ein Polsterbauteil (21) eines Sitzes (10) für ein Fahrzeug von unten stützt, einen Halteabschnitt (52c), der mit dem Verbinder (42) eingreifen kann und von dem Verbinder (42) getrennt werden kann, und einen erweiterten Abschnitt (52) enthält, der sich von einer Seite nach unten erstreckt, die einer Seite, an der sich der Leitungsabschnitt (41c) von dem Erfassungsabschnitt (41a) erstreckt, entgegengesetzt ist, wobei der erweiterte Abschnitt (52) den Halteabschnitt (52c) an einem distalen Ende des erweiterten Abschnitts (52) enthält.

2. Sitzerfassungsvorrichtung gemäß Anspruch 1, wobei, in einem Zustand, in dem der Befestigungsabschnitt (51a, 51a1, 51b) an dem Stützbauteil (18) angebracht ist, sodass Lastinformation, die von oben über das Polsterbauteil (21) eingegeben wird, durch den Erfassungsabschnitt (41a) erfasst werden kann, der Verbinder (42) durch den Halter (50) in solch einer Weise gehalten wird, dass der Verbindungsanschluss (42b) schräg nach unten geöffnet ist.

3. Sitzerfassungsvorrichtung gemäß einem der Ansprüche 1 oder 2, wobei der Befestigungsabschnitt (51a, 51a1, 51b) an mindestens zwei Positionen vorgesehen ist.

4. Sitzerfassungsvorrichtung gemäß Anspruch 3, wobei die Befestigungsabschnitte (51a, 51a1) in Richtungen angeordnet sind, die im Wesentlichen rechtwinklig zueinander sind.

5. Sitzerfassungsvorrichtung gemäß einem der Ansprüche 1 bis 4, wobei der Halter (50) einen Beschränkungsabschnitt (70) enthält, der den Halter (50) von einem Verlagern in einer Axialrichtung des Stützbauteils (18) beschränkt.

6. Sitzerfassungsvorrichtung gemäß Anspruch 5, wobei der Beschränkungsabschnitt (70) einen Horizontalabschnitt (70a) und einen nach unten erweiterten Abschnitt (70b) enthält, der sich von dem Horizontalabschnitt (70a) nach unten erstreckt.

7. Sitzerfassungsvorrichtung gemäß einem der Ansprüche 1 bis 6, wobei der Halter (50) einen Erfassungsempfindlichkeitsänderungsabschnitt (53) enthält, der eine Erfassungsempfindlichkeit des Erfassungsabschnitts (41a) ändern kann.

8. Sitzerfassungsvorrichtung gemäß Anspruch 7, wobei der Erfassungsempfindlichkeitsänderungsabschnitt (53) einen Vorsprung (53a) oder einen vertieften Abschnitt (53b) enthält, wobei der Vorsprung (53a) oder der vertiefte Abschnitt (53b) an einem Abschnitt vorgesehen ist, der dem Erfassungsabschnitt (41a) zugewandt ist.

9. Sitzerfassungsvorrichtung gemäß einem der Ansprüche 1 bis 8, wobei der Erfassungsabschnitt (41a) einem Membranschalter (41) entspricht, der in einer Folienform ausgebildet ist.

## Revendications

1. Appareil de détection d'occupation de siège comprenant :
une partie de détection (41a) détectant l'information de charge introduite à partir d'une direction de détection qui est prédéterminée ;
**caractérisé par** :
un connecteur (42) comprenant un orifice de connexion (42b) pour se connecter à un circuit externe et agencé sur un plan qui est différent d'un plan sur lequel la partie de détection (41a) est agencée de sorte que le connecteur (42) recouvre la partie de détection (41a) dans la direction de détection ;
une partie de conduction (41c) transmettant l'information de charge de la partie de détection (41a) au connecteur (42) et agencée à partir de la partie de détection (41a) vers le connecteur (42) dans un état dans lequel elle est pliée ; et
un support (50) supportant la partie de détection (41a) et le connecteur (42), et comprenant une partie de fixation (51a, 51a1, 51b) qui peut être fixée à un élément de support (18) supportant un élément de coussin (21) d'un siège (10) pour un véhicule, par dessous, une partie de maintien (52c) pouvant être mise en prise avec le connecteur (42) et pouvant être dégagée du connecteur (42) et une partie étendue (52) étendue vers le bas à partir d'un côté opposé à un côté sur lequel la partie de conduction (41c) s'étend à partir de la partie de détection (41a), la partie étendue (52) comprenant la partie de maintien (52c) au niveau d'une extrémité distale de la partie étendue (52).

2. Appareil de détection d'occupation de siège selon la revendication 1, dans lequel, dans un état dans lequel la partie de fixation (51a, 51a1, 51b) est fixée à l'élément de support (18) de sorte que l'information de charge introduite à partir dessus via l'élément de coussin (21), est détectable par la partie de détection (41a), le connecteur (42) est maintenu par le support (50) de sorte que l'orifice de connexion (42b) est ouvert obliquement vers le bas.

3. Appareil de détection d'occupation de siège selon la revendication 1 ou 2, dans lequel la partie de fixation (51a, 51a1, 52b) est prévue au niveau d'au moins deux positions.

4. Appareil de détection d'occupation de siège selon la revendication 3, dans lequel les parties de fixation (51a, 51a1) sont agencées dans des directions qui sont sensiblement perpendiculaires entre elles.

5. Appareil de détection d'occupation de siège selon l'une quelconque des revendications 1 à 4, dans lequel le support (50) comprend une partie de restriction (70) empêchant le support (50) de se déplacer dans une direction axiale de l'élément de support (18).

6. Appareil de détection d'occupation de siège selon la revendication 5, dans lequel la partie de restriction (70) comprend une partie horizontale (70a) et une partie étendue vers le bas (70b) étendue vers le bas à partir de la partie horizontale (70a).

7. Appareil de détection d'occupation de siège selon l'une quelconque des revendications 1 à 6, dans lequel le support (50) comprend une partie de changement de sensibilité de détection (53) qui est une sensibilité de détection pouvant être changée de la partie de détection (41a).

8. Appareil de détection d'occupation de siège selon la revendication 7, dans lequel la partie de changement de sensibilité de détection (53) comprend une saillie (53a) ou une partie évidée (53b), la saillie (53a) ou la partie évidée (53b) est prévue au niveau d'une partie faisant face à la partie de détection (41a).

9. Appareil de détection d'occupation de siège selon l'une quelconque des revendications 1 à 8, dans lequel la partie de détection (41a) correspond à un commutateur à membrane (41) formé selon une forme de film.
